# EUROPÄISCHE PATENTSCHRIFT

(11) **EP 3 877 675 B1**
(45) Veröffentlichungstag und Bekanntmachung des Hinweises auf die Patenterteilung: **26.10.2022**
(21) Anmeldenummer: 19786292.3
(22) Anmeldetag: 07.10.2019
(51) Int. Cl.: F16H 57/04, F16J 15/00, F16J 15/16, F16J 15/3236, F16N 21/00, F16L 27/08, F16J 15/3232, F16H 57/08

(54) **SCHMIERSTOFFTRANSFERRING MIT MEHREREN KAMMERN**
LUBRICANT TRANSFER RING HAVING A PLURALITY OF CHAMBERS
BAGUE DE TRANSFERT DE LUBRIFIANT COMPRENANT PLUSIEURS CHAMBRES

(30) Priorität: 07.11.2018 DE 102018218976
(43) Veröffentlichungstag der Anmeldung: 15.09.2021
(73) Patentinhaber: ZF Friedrichshafen AG, 88046 Friedrichshafen (DE); ZF Wind Power Antwerpen NV, 3920 Lommel (BE)
(72) Erfinder: ROTTIERS, Stijn, 9160 Lokeren (BE); DE LAET, Wim, 2000 Antwerpen (BE)
(74) Vertreter: ZF Friedrichshafen AG
(86) Internationale Anmeldenummer: PCT/EP2019/077009
(87) Internationale Veröffentlichungsnummer: WO 2020/094306

(56) Entgegenhaltungen:
- EP-A1- 1 488 139
- EP-A1- 2 527 694
- WO-A1-2015/106901
- DE-A1- 19 916 106
- DE-A1-102013 222 847

## Beschreibung

Die Erfindung betrifft eine Anordnung nach dem Oberbegriff von Anspruch 1.

Die Druckschrift EP 1 488 139 A1 offenbart einen Ring zum Transfer von Schmierstoff zwischen einem Getriebegehäuse und einem drehbar gelagerten Planetenträger. Der Ring ist an dem Planetenträger fixiert. Er greift in eine Nut in dem Getriebegehäuse ein, sodass ein schmierstoffleitender Hohlraum entsteht.

Aus der Druckschrift DE 199 16 106 A1 ist ein Maschinenelement zur Durchführung von Medien, insbesondere gasförmige und flüssige Druckmedien oder Vakuum, über zwei sich relativ zueinander rotierenden Maschinenteilen mit einer zwischen den Maschinenteilen liegenden durchbohrten Dichtung bekannt. Die Dichtung weist zwei sich symmetrisch gegenüberliegenden Dichtlippenpaare mit dazwischen liegenden Bohrungen, die die beiden ringförmigen Räume zwischen den beiden Dichtlippenpaaren miteinander verbinden, auf.

Aus der Druckschrift US 4,063,743 A ist eine weitere Drehdurchführung bekannt. Sie weist ein Dichtungspaar bestehend aus zwei einzelnen Dichtungen mit je zwei Dichtlippen auf, die auf einem feststehenden Teil axial nebeneinander, d.h. in Richtung der Drehachse angeordnet sind und mit je einer Dichtlippe mittels Vorspannung der Dichtung auf dem feststehenden Teil statisch und mit ihrer zweiten Dichtlippe gegen das rotierende Teil dynamisch abdichten. Das Druckmedium gelangt von einem Teil zum anderen zwischen den beiden Dichtungen.

Die Druckschrift DE 9 26 170 A beschreibt eine Drehdurchführung mit mehreren axial in Richtung der Drehachse nebeneinander angeordneten Einzeldichtungen mit je vier Dichtlippen, die an einem rotierenden Teil befestigt und in einem hohlzylindrischen Raum des zweiten Teils koaxial laufen und mit ihren vier Dichtlippen gegen denselben Teil dynamisch abdichten.

Die Druckschrift DE 5 60 674 A beschreibt eine Drehdurchführung mit mehreren axial d.h. in Richtung der Drehachse nebeneinander angeordneten Doppellippen-Dichtungen, die durchbohrt sind und alle samt Distanzstücken aus Gummi und Leder zwecks Abdichtung vorgespannt werden. Das Druckmedium gelangt von einem Teil zum anderen durch die Dichtungen.

Die Druckschrift DE 40 06 257 A1 beschreibt eine Drehdurchführung mit einer durchbohrten Dichtung, die mit zwei axial nebeneinander angeordneten Dichtlippen auf einer quer durchbohrten Welle sitzen. Das Druckmedium gelangt durch die Bohrungen der Dichtung in die Bohrung der Welle. Zwecks Abdichtens werden die beiden dynamisch abdichtenden Dichtlippen mit Hilfe von O-Ringen auf die Welle gedrückt.

Die Druckschriften GB 1 312 199 A und DE 21 19 468 A1 offenbaren Drehdurchführungen mit zwei Dichtungen, die je zwei Dichtlippenpaaren besitzen. Ein Dichtlippenpaar sitzt statisch vorgespannt axial nebeneinander auf dem rotierenden Teil, während das zweite Dichtlippenpaar sich in einer radialen Nut koaxial zur Drehachse befindet und mit seinen beiden Dichtlippen gegen zwei zur Drehachse senkrechten Lauffläche der Nut dynamisch abdichtet.

Die Druckschrift DE 25 46 746 A1 zeigt eine Drehdurchführung, in der die zuletzt beschriebene Dichtung in zweifacher Ausführung axial in einem einzigen feststehenden Teil mit zwei Nuten angeordnet ist.

Der Erfindung liegt die Aufgabe zugrunde, die Übertragung von Fluid zwischen mehreren Fluidleitungen zweier relativ zueinander verdrehbarer Komponenten zu verbessern. Dabei sollen die auftretenden Leck- und Reibungsverluste verringert werden. Diese Aufgabe wird gelöst durch eine Anordnung nach Anspruch 1. Bevorzugte Weiterbildungen sind in den Unteransprüchen enthalten.

Die Anordnung weist eine erste Komponente und eine zweite Komponente auf, die relativ zueinander verdrehbar sind. Bevorzugt handelt es sich um Komponenten eines Getriebes, etwa einen drehbar gelagerten Planetenträger und eine gehäusefeste Struktur.

Die Anordnung weist darüber hinaus einen Fluidtransferring auf. Mit Fluidtransferring wird ein Mittel zum Übertragen von Fluid zwischen der ersten Komponente und der zweiten Komponente, das heißt von der ersten Komponente zu der zweiten Komponente und/oder von der zweiten Komponente zu der ersten Komponente, bezeichnet. Bei dem Fluid kann es sich insbesondere um Öl handeln.

Die erste Komponente weist eine erste Nut auf. Der Fluidtransferring ist mindestens drehfest, bevorzugt starr, das heißt ohne die Möglichkeit einer Relativbewegung, an der zweiten Komponente fixiert und greift mit einer ersten Wandung und einer zweiten Wandung in die erste Nut ein. Mindestens ein Teil der ersten Wandung verläuft also innerhalb der ersten Nut. Ebenso verläuft mindestens ein Teil der zweiten Wandung innerhalb der ersten Nut. Dadurch bildet der Fluidtransferring mit der ersten Nut einen ersten Hohlraum. Der erste Hohlraum stellt eine erste schmierstoffleitende Verbindung zwischen der ersten Komponente und der zweiten Komponente her.

Da die erste Komponente und die zweite Komponente relativ zueinander verdrehbar sind, müssen die erste Wandung, die zweite Wandung und die Nut zu einer Rotationsachse einer Relativdrehung der ersten Komponente und der zweiten Komponente rotationssymmetrisch sein.

Erfindungsgemäß weist die erste Komponente eine zweite Nut auf. Mit einer dritten Wandung greift der Fluidtransferring in die zweite Nut ein. Mindestens ein Teil der dritten Wandung verläuft innerhalb der zweiten Nut. Dadurch entsteht ein zweiter Hohlraum. Der Fluidtransferring bildet also mit der zweiten Nut den zweiten Hohlraum. Der zweite Hohlraum stellt eine zweite fluidleitende Verbindung zwischen der ersten Komponente und der zweiten Komponente her.

Der Fluidtransferring greift ausschließlich mit der dritten Wandung in die zweite Nut ein. Eine vierte Wandung ist nicht vorgesehen.

Zwischen der ersten Nut und der zweiten Nut verläuft ein Steg. Dieser greift in einen Zwischenraum zwischen der zweiten Wandung und der dritten Wandung ein. Mindestens ein Teil des Stegs befindet sich also in dem genannten Zwischenraum.

Der erste Hohlraum und der zweite Hohlraum werden durch die zweite Wandung und den Steg voneinander getrennt. Die zweite Wandung und der Steg sind also sowohl an der Bildung des ersten Hohlraums als auch des zweiten Hohlraums beteiligt.

Auch die zweite Nut und die dritte Wandung sind bezüglich der Drehachse der ersten Komponente und der zweiten Komponente rotationssymmetrisch.

Zwischen der ersten Wandung und der ersten Nut, zwischen der zweiten Wandung und der ersten Nut und zwischen der dritten Wandung und der zweiten Nut verläuft bevorzugt jeweils ein schmaler Spalt. Dieser ist so schmal, dass ein Leckageverlust durch den Spalt minimal ist und so ein Druckaufbau in den Hohlräumen, der für die Übertragung von Fluid notwendig ist, zustande kommt. Durch die Spalten wird verhindert, dass sich der Fluidtransferring und die erste Komponente berühren. Dadurch ist der Fluidtransferring verschleißfrei. Zudem ist es möglich, einen harten Werkstoff, etwa Metall, für den Fluidtransferring zu verwenden.

Eine vorteilhafte Weiterbildung der Erfindung ergibt sich daraus, dass nur durch den zwischen der ersten Wandung und der ersten Nut verlaufenden Spalt und durch den zwischen der dritten Wandung und der zweiten Nut verlaufenden Spalt Fluid austreten kann. Der zwischen der zweiten Wandung und der ersten Nut verlaufende Spalt lässt lediglich eine Leckage zwischen den beiden Hohlräumen zu. Die Leckageverluste werden somit verringert.

Alternativ ist es möglich, die Anordnung spaltfrei zu gestalten. In diesem Fall bilden die drei Wandungen des Fluidtransferrings jeweils eine Dichtung aus. Die Dichtung der ersten Wandung und die Dichtung der zweiten Wandung liegen an der ersten Nut an; die Dichtung der dritten Wandung liegt an der zweiten Nut an. Dadurch werden Leckagen weitestgehend verhindert. Allerdings kommt es durch die Dichtungen zu Reibung. Durch die Dichtung verringert sich die Reibung, da die Erfindung gegenüber dem Stand der Technik eine Reduzierung der Anzahl der Dichtungen von vier auf drei ermöglicht.

Der Fluidtransferring und die Nuten können bezüglich der obengenannten Rotationsachse axial oder radial zueinander versetzt angeordnet sein. Bei einem axialen Versatz sind die Nuten in axialer Richtung geöffnet, bei einem radialen Versatz entsprechend in radialer Richtung.

In einer bevorzugten Weiterbildung weist die erste Komponente eine erste Fluidleitung und eine zweite Fluidleitung auf, während die zweite Komponente eine dritte Fluidleitung und eine vierte Fluidleitung aufweist. Die erste Fluidleitung und die dritte Fluidleitung münden in den ersten Hohlraum. Die zweite Fluidleitung und die vierte Fluidleitung münden in den zweiten Hohlraum. Dadurch verbindet der erste Hohlraum die erste Fluidleitung und die dritte Fluidleitung fluidleitend miteinander. Entsprechend verbindet der zweite Hohlraum die zweite Fluidleitung und die vierte Fluidleitung fluidleitend miteinander.

Der Fluidtransferring ist bevorzugt einstückig weitergebildet.

Ein erster Teil des Fluidrings umfasst die erste Wandung und die zweite Wandung. Ein zweiter Teil umfasst die zweite Wandung und die dritte Wandung. Der erste Teil und der zweite Teil überschneiden sich also in der zweiten Wandung. Der erste Teil und der zweite Teil haben weiterbildungsgemäß jeweils ein U-förmiges Profil. Dies bedeutet, dass der erste Teil und der zweite Teil im Längsschnitt, das heißt in einem Schnitt, der die obengenannte Rotationsachse vollständig umfasst, U-förmig sind. Im Längsschnitt ergibt sich das Bild zweier U, die einen gemeinsamen Schenkel haben. Bei dem gemeinsamen Schenkel handelt es sich um den Längsschnitt der zweiten Wandung. Die übrigen Schenkel werden vom Querschnitt der ersten Wandung und der dritten Wandung gebildet.

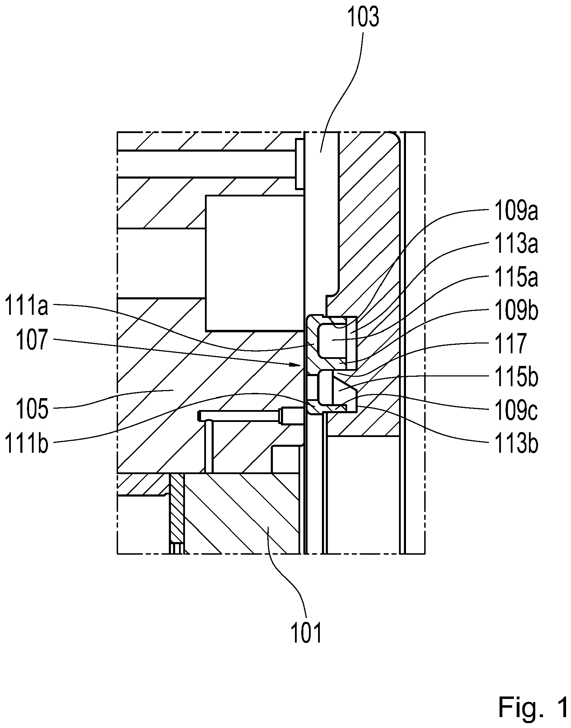

Ein bevorzugtes Ausführungsbeispiel der Erfindung ist in Fig. 1 dargestellt. Im Einzelnen zeigt:
Fig. 1 einen Ausschnitt einer Planetenstufe mit Fluidtransferring.

Fig. 1 stellt einen Planetenträger 101 dar, der drehbar in einem Getriebegehäuse 103 gelagert ist. In dem Planetenträger 101 ist ein Planetenbolzen 105 fixiert.

Zur Übertragung von Getriebeöl von dem feststehenden Getriebegehäuse 103 zu dem drehbaren Planetenträger 101 ist ein Transferring 107 vorgesehen. Der weist eine erste Wandung 109a, eine zweite Wandung 109b und eine dritte Wandung 109c auf. Die drei Wandungen 109a, 109b, 109c erstrecken sich in axialer Richtung. Die zweite Wandung 109b befindet sich radial zwischen der ersten Wandung 109a und der dritten Wandung 109c. Ein erstes kreisringförmiges Segment 111a verbindet die erste Wandung 109a mit der zweiten Wandung 109b. Entsprechend verbindet ein zweites kreisringförmiges Segment 111b die zweite Wandung 109b mit der dritten Wandung 109c. In den kreisringförmigen Segmenten 111a, 111b ist der Transferring 107 an dem Planetenträger 101 befestigt.

Das Gehäuse 103 weist eine erste Nut 113a und eine zweite Nut 113b auf, die in Richtung des Transferrings 107 geöffnet sind. Mit der ersten Wandung 109a und der zweiten Wandung 109b greift der Transferring 107 in die erste Nut 113a ein. Dadurch bilden der Transferring 107 und die erste Nut 113a einen ersten Hohlraum 115a. Im Einzelnen wird der erste Hohlraum 115a durch die erste Wandung 109a, die zweite Wandung 109c, das erste kreisringförmige Segment 111a und die erste Nut 113a gebildet.

Mit der dritten Wandung 109c greift der Transferring 107 in die zweite Nut 113b ein, sodass ein zweiter Hohlraum 115b entsteht. Da die erste Nut 113a und die zweite Nut 113b unmittelbar benachbart angeordnet und lediglich durch einen schmalen Steg 117 voneinander getrennt sind, bildet die zweite Wandung 109a zusammen mit der dritten Wandung 109c, dem zweiten kreisringförmigen Segment 111b und der zweiten Nut 113b einen zweiten Hohlraum 115b.

In den ersten Hohlraum 115a und in den zweiten Hohlraum 115b münden jeweils eine durch das Getriebegehäuse 103 gebildete Schmierstoffleitung und eine durch den Planetenträger 101 und den Planetenbolzen 105 gebildete Schmierstoffleitung. Diese Schmierstoffleitung werden durch den jeweiligen Hohlraum 115a, 115b schmierstoffleitend miteinander verbunden. Dadurch kann Schmierstoff von dem feststehenden Getriebegehäuse 103 zu dem sich drehenden Planetenträger 101 übergeleitet werden.

### Bezugszeichen

- 101: Planetenträger
- 103: Getriebegehäuse
- 105: Planetenbolzen
- 107: Transferring
- 109a: erste Wandung
- 109b: zweite Wandung
- 109c: dritte Wandung
- 111a: erstes kreisringförmiges Segment
- 111b: zweites kreisringförmiges Segment
- 113a: erste Nut
- 113b: zweite Nut
- 115a: erster Hohlraum
- 115b: zweiter Hohlraum
- 117: Steg

## Patentansprüche

1. Anordnung mit einer ersten Komponente (103), einer zweiten Komponente (101) und einem Fluidtransferring (107); wobei
die erste Komponente (103) und die zweite Komponente (101) relativ zueinander verdrehbar sind; wobei
die erste Komponente (103) eine erste Nut (113a) aufweist; wobei der Fluidtransferring (107) an der zweiten Komponente (101) fixiert ist und mit einer ersten Wandung (109a) und einer zweiten Wandung (109b) derart in die erste Nut (113a) eingreift, dass der Fluidtransferring (107) und die erste Nut (113a) einen ersten Hohlraum (115a) bilden; wobei
die erste Komponente (103) eine zweite Nut (113b) aufweist; und wobei der Fluidtransferring (107) mit einer dritten Wandung (109c) derart in die zweite Nut (113b) eingreift, dass der Fluidtransferring (107) und die zweite Nut (113b) einen zweiten Hohlraum (115b) bilden; **dadurch gekennzeichnet, dass** der Fluidtransferring (107) ausschließlich mit der dritten Wandung (109c) in die zweite Nut eingreift.

2. Anordnung nach Anspruch 1; **dadurch gekennzeichnet, dass**
die erste Komponente (103) eine erste Fluidleitung und eine zweite Fluidleitung aufweist; wobei
die zweite Komponente (101) eine dritte Fluidleitung und eine vierte Fluidleitung aufweist; wobei
die erste Fluidleitung und die dritte Fluidleitung in den ersten Hohlraum (115a) münden; und wobei
die zweite Fluidleitung und die vierte Fluidleitung in den zweiten Hohlraum (115b) münden.

3. Anordnung nach einem der vorhergehenden Ansprüche; **dadurch gekennzeichnet, dass**
der Fluidtransferring (107) einstückig aufgebaut ist.

4. Anordnung nach einem der vorhergehenden Ansprüche; **dadurch gekennzeichnet, dass**
ein erster, die erste Wandung (109a) und die zweite Wandung (109b) umfassender Teil des Fluidtransferrings (107) und ein zweiter, die zweite Wandung (109b) und die dritte Wandung (109c) umfassender Teil des Fluidtransferrings (107) jeweils ein U-förmiges Profil haben.

## Claims

1. Arrangement having a first component (103), having a second component (101) and having a fluid-transfer ring (107); wherein
the first component (103) and the second component (101) are rotatable relative to one another; wherein the first component (103) has a first groove (113a); wherein
the fluid-transfer ring (107) is fixed to the second component (101) and, by way of a first wall (109a) and a second wall (109b), engages into the first groove (113a) in such a way that the fluid-transfer ring (107) and the first groove (113a) form a first cavity (115a); wherein
the first component (103) has a second groove (113b); and wherein,
by way of a third wall (109c), the fluid-transfer ring (107) engages into the second groove (113b) in such a way that the fluid-transfer ring (107) and the second groove (113b) form a second cavity (115b); **characterized in that**
the fluid-transfer ring (107) engages into the second groove exclusively by way of the third wall (109c) .

2. Arrangement according to Claim 1; **characterized in that**
the first component (103) has a first fluid line and a second fluid line; wherein
the second component (101) has a third fluid line and a fourth fluid line; wherein
the first fluid line and the third fluid line open out into the first cavity (115a); and wherein
the second fluid line and the fourth fluid line open out into the second cavity (115b).

3. Arrangement according to either of the preceding claims; **characterized in that**
the fluid-transfer ring (107) is constructed in one piece.

4. Arrangement according to one of the preceding claims; **characterized in that**
a first part, comprising the first wall (109a) and the second wall (109b), of the fluid-transfer ring (107) and a second part, comprising the second wall (109b) and the third wall (109c), of the fluid-transfer ring (107) each have a U-shaped profile.

## Revendications

1. Ensemble comprenant un premier composant (103), un deuxième composant (101) et un anneau de transfert de fluide (107) ;
le premier composant (103) et le deuxième composant (101) pouvant tourner l'un par rapport à l'autre ;
le premier composant (103) comportant une première gorge (113a) ;
l'anneau de transfert de fluide (107) étant fixé au deuxième composant (101) et s'engageant dans la première gorge (113a) au moyen d'une première paroi (109a) et d'une deuxième paroi (109b) de sorte que l'anneau de transfert de fluide (107) et la première gorge (113a) forment une première cavité (115a) ;
le premier composant (103) comportant une deuxième gorge (113b) ; et
l'anneau de transfert de fluide (107) s'engageant dans la deuxième gorge (113b) au moyen d'une troisième paroi (109c) de sorte que l'anneau de transfert de fluide (107) et la deuxième gorge (113b) forment une deuxième cavité (115b) ; **caractérisé en ce que**
l'anneau de transfert de fluide (107) s'engage dans la deuxième gorge uniquement au moyen de la troisième paroi (109c).

2. Ensemble selon la revendication 1, **caractérisé en ce que**
le premier composant (103) comporte un premier conduit de fluide et un deuxième conduit de fluide ;
le deuxième composant (101) comportant un troisième conduit de fluide et un quatrième conduit de fluide ;
le premier conduit de fluide et le troisième conduit de fluide débouchant dans la première cavité (115a) ; et le deuxième conduit de fluide et le quatrième conduit de fluide débouchant dans la deuxième cavité (115b).

3. Ensemble selon l'une des revendications précédentes, **caractérisé en ce que**
l'anneau de transfert de fluide (107) est réalisé d'une seule pièce.

4. Ensemble selon l'une des revendications précédentes, **caractérisé en ce que**
une première partie de l'anneau de transfert de fluide (107), laquelle comprend la première paroi (109a) et la deuxième paroi (109b), et une deuxième partie de l'anneau de transfert de fluide (107), laquelle comprend la deuxième paroi (109b) et la troisième paroi (109c), ont chacune un profil en forme de U.
